(19) Europäisches Patentamt
European Patent Office
Office européen des brevets

(11) Veröffentlichungsnummer: **0 214 319 B1**

(12) # EUROPÄISCHE PATENTSCHRIFT

(45) Veröffentlichungstag der Patentschrift:
02.08.89

(51) Int. Cl.⁴: **H04Q 7/04**

(21) Anmeldenummer: 85111019.7

(22) Anmeldetag: **02.09.85**

(54) Verfahren zum Weiterreichen einer Mobilstation von einer Funkzelle zu einer anderen.

(43) Veröffentlichungstag der Anmeldung:
18.03.87 Patentblatt 87/12

(73) Patentinhaber: **ANT Nachrichtentechnik GmbH,**
**Gerberstrasse 33, D-7150 Backnang(DE)**

(45) Bekanntmachung des Hinweises auf die Patenterteilung:
02.08.89 Patentblatt 89/31

(72) Erfinder: **Sperlich, Josef, Dipl.-Ing., Kelterweg 52,**
**D-7150 Backnang(DE)**

(84) Benannte Vertragsstaaten:
**DE FR GB IT NL SE**

(56) Entgegenhaltungen:
EP-A- 0 036 146
EP-A- 0 037 070
DE-A- 2 042 710
DE-A- 2 659 635

IEEE TRANSACTIONS ON VEHICULAR TECHNOLOGY,
Band VT-33, Nr. 4, November 1984, Seiten 269-275, IEEE,
New York, US; A.C. STOCKER: "Small-cell mobile
phone systems"
TELCOM REPORT, Band 8, Nr. 2, März/April 1985,
Seiten 85-90, Berlin, DE; K. KAMMERLANDER:
"Eigenschaften des zellularen Mobilfunksystems
C450/900"

## Beschreibung

Die vorliegende Erfindung betrifft ein Verfahren zum Weiterreichen einer Mobilstation von einer Funkzelle zu einer anderen innerhalb eines zellularen Mobilfunknetzes, in dem jeder Funkzelle eine mit Mobilstationen Signale austauschende Feststation zugeordnet ist, wobei von allen Feststationen, welche zu derjenigen Feststation, die gerade mit der fraglichen Mobilstation in Verbindung steht, benachbart sind, die Empfangsqualität von Signalbursts gemessen wird, die von der betreffenden Mobilstation ausgesendet worden sind, und dann von den diese Signalbursts mit ausreichender Qualität empfangenden Nachbarfeststationen Signallaufzeitmessungen durchgeführt werden, wonach die Mobilstation an diejenige Feststation weitergereicht wird, für welche die geringste Signallaufzeit zwischen ihr und der Mobilstation ermittelt worden ist.

Ein derartiges Verfahren ist aus der EP-B1 0 037 070 bekannt, das ebenfalls zur Ortsbestimmung von Mobilstationen auf Empfangssignalqualitäts- und Signallaufzeitmessungen beruht. Erst die Signallaufzeitmessungen ergeben eine zuverlässige und eindeutige Auskunft darüber, auf welche Funkzelle sich eine Mobilstation zubewegt, so daß dann die Mobilstation an die Feststation dieser Funkzelle übergeben werden kann.

Der Erfindung liegt nun die Aufgabe zugrunde, ein Verfahren der eingangs genannten Art anzugeben, nach dem einer Mobilstation die für die Übergabe an die Feststation einer anderen Funkzelle erforderlichen Umschaltinformationen mitgeteilt werden, ohne daß dazu die noch bestehende Nutzsignalverbindung mit der Feststation der vorhergehenden Funkzelle unterbrochen werden muß oder beeinträchtigt wird.

Erfindungsgemäß wird diese Aufgabe durch die im Kennzeichen des Patentanspruchs 1 aufgeführten Merkmale gelöst.

Zweckmäßige Weiterbildungen der Erfindung gehen aus den Unteransprüchen hervor.

Durch das erfindungsgemäße Verfahren brauchen keine für das ganze Mobilfunknetz synchrone Umschaltzeitlagen festgelegt zu werden. Jede Feststation, welche eine Mobilstation neu übernimmt, kann den Umschaltzeitpunkt separat für sich festlegen.

Anhand eines in der Zeichnung dargestellten Ausführungsbeispiels wird nachfolgend die Erfindung näher erläutert.

Fig. 1 zeigt mehrere in Gruppen zusammengefaßte Funkzellen und

Fig. 2 zeigt eine Übersicht der zwischen einer Mobilstation und mehreren Feststationen ausgetauschten Signalkanäle und

Fig. 3 zeigt einen Signalkanal, der Umschaltinformationen für eine an eine andere Feststation zu übergebende Mobilstation enthält.

In zellularen Mobilfunksystemen werden Mobilstationen, wenn sie während einer bestehenden Verbindung mit der Feststation einer Funkzelle das Versorgungsgebiet einer benachbarten Funkzelle erreichen, automatisch an die Feststation dieser Nachbarfunkzelle übergeben, sofern diese noch Sende- und Empfangskanäle frei hat.

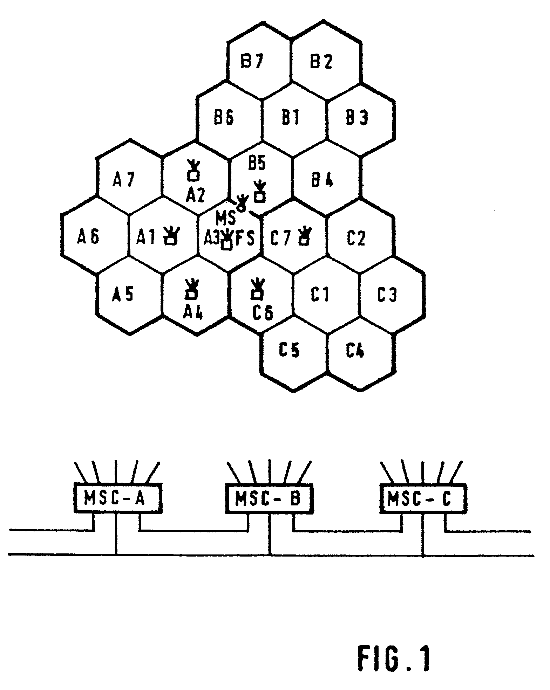

Die Fig. 1 zeigt ein übliches zellulares Mobilfunknetz, dessen Funkzellen in Gruppen A, B und C zusammengefaßt sind. Dabei gehören zur Gruppe A die Funkzellen A1 ... A7, zur Gruppe B die Funkzellen B1 ... B7 und zur Gruppe C die Funkzellen C1 ... C7. Jeder Funkzelle ist eine mit den Mobilstationen verkehrende Feststation zugeordnet. Die zu einer Funkzellengruppe A, B bzw. C gehörenden Feststationen sind jeweils mit einer Funkvermittlungsstelle MSC-A, MSC-B bzw. MSC-C verbunden. Diese Funkvermittlungsstellen MSC-A, MSC-B und MSC-C stehen untereinander über ein terrestrischen Netz (Daten und/oder Fernsprechnetz) in Verbindung. Somit können zwischen allen Feststationen des gesamten Mobilfunknetzes Informationen ausgetauscht werden. Außerdem werden über die Funkvermittlungsstellen die Verbindungen von Mobilstationen zu Teilnehmern am terrestrischen Netz oder zu anderen Mobilstationen hergestellt.

In der Fig. 1 ist als Beispiel dargestellt, daß sich eine Mobilstation MS, welche augenblicklich noch mit der Feststation FS der Funkzelle A3 in Verbindung steht, sich der Zellgrenze in Richtung der Nachbarfunkzelle B5 nähert. Sobald die Mobilstation MS die Zellgrenze überschritten hat, müßte sie auf die Feststation der Funkzelle B5 umschalten.

Anschließend soll ein Verfahren beschrieben werden, nach dem der Ort einer Mobilstation, also diejenige Funkzelle auf die die Mobilstation sich zubewegt und in Kürze hineinfahren wird, ermittelt werden kann.

Für die Signalübertragung zwischen Mobilstationen und Feststationen ist ein in ein Unterband und in ein Oberband aufgeteilter Frequenzbereich vorgesehen. Im Unterband werden beispielsweise die Signale von den Mobilstationen zu den Feststationen und im Oberband die Signale von den Feststationen zu den Mobilstationen übertragen. Dabei sind das Unter- und das Oberband in jeweils mehrere Teilfrequenzbänder unterteilt. Je ein Teilfrequenzband gleicher Ordnungszahl im Unter- und im Oberband steht für ein Zeitmultiplexsystem mit Vielfachzugriff (TDMA-System) zur Verfügung. Ein solches TDMA-System besteht aus mehreren in Überrahmen zusammengefaßten Rahmen, von denen jeder mehrere blockweise aneinandergereihte Signalkanäle enthält.

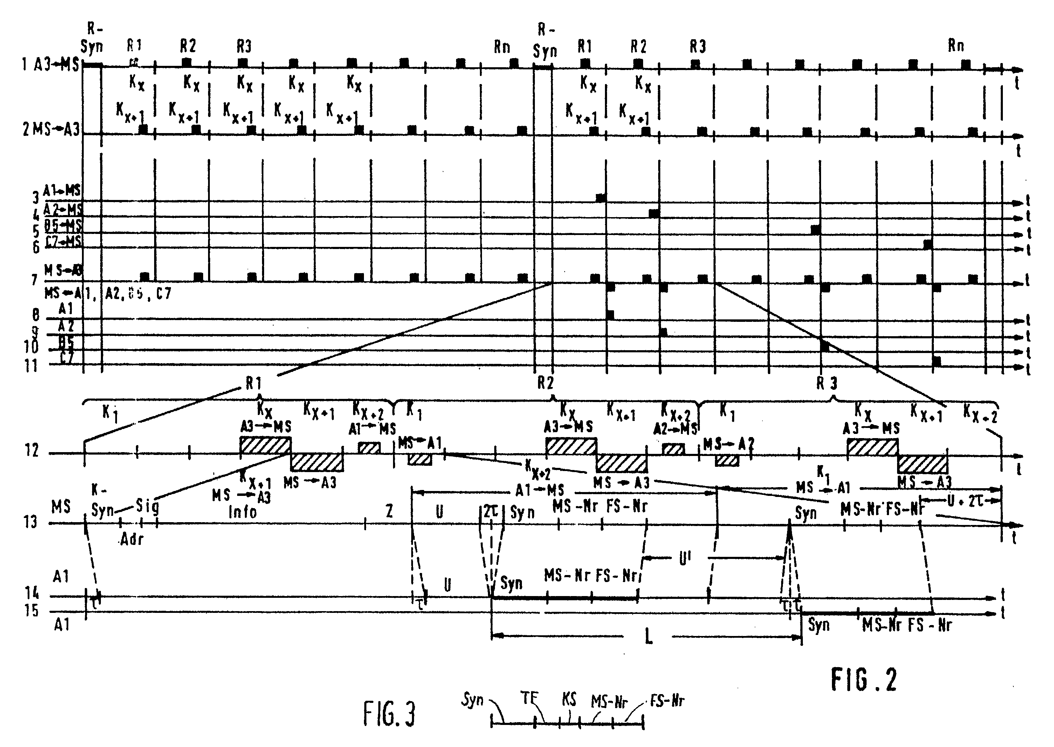

Die Zeilen 1 und 2 der Übersicht in Fig. 2 zeigen den Rahmenaufbau eines TDMA-Systems, wobei zu einen mit einem Rahmensynchronwort R-Syn beginnenden Überrahmen n Rahmen R1 ... Rn gehören. Wie der Zeile 1 zu entnehmen ist, ist von allen z.B. von der Feststation der Funkzelle A3 in den Rahmen R1 ... Rn ausgesendeten Signalkanälen der Signalkanal $K_X$ für die Mobilstation MS bestimmt. Nur diesen Kanal $K_X$ wertet die Mobilstation aus und setzt in Gegenrichtung ihre Information burstweise in einem, dem Empfangssignalkanal $K_X$ folgenden Signalkanal $K_{X+1}$, wie die Zeile 2 verdeutlicht, an die Feststation ab. Der Mobilstation werden also für eine Verbindung mit einer Feststation im Frequenzbereich zwei bestimmte Teilfrequenzbänder und im Zeitbereich ein bestimmter Signalkanal innerhalb der Rahmen zugewiesen. Teilfrequenzbänder, die der Feststation z.B. der Funkzelle A3 zugeteilt sind, dürfen erst wieder von den Feststationen der Funkzellen B3 und C3 in den anderen Funkzellenbündeln A und B belegt werden.

Erkennt nun im vorliegenden Beispiel die Feststation der Funkzelle A3 aufgrund der Laufzeit der zwischen ihr und der Mobilstation übertragenen Signalbursts, daß die Mobilstation an der Funkzellengrenze angelangt ist, so werden alle Feststationen der die Funkzelle A3 direkt umgebenden Nachbarfunkzellen A1, A2, B5, C7, C6 und A4 über die Funkvermittlungsstellen MSC-A, MSC-B und MSC-C aufgefordert, Empfangssignalqualitätsmessungen der von der Mobilstation ausgesendeten Signalbursts durchzuführen. Dazu wird vorher den Nachbarfeststationen eine Kennung der betreffenden Mobilstation mitgeteilt, welche z.B. ein alphanumerisches Landeskennzeichen, die Teilnehmernummer der Mobilstation und die Nummern der Teilfrequenzbänder und der Signalkanäle enthält, in denen die Mobilstation ihre Signalburst aussendet.

Nach Mitteilung der Kennung versuchen sich in den Nachbarfeststationen vorhandene Meßempfänger auf die von der Mobilstation ausgesendeten Signalbursts aufzusynchronisieren, wobei den Feststationen die Zählweise der Rahmen durch ein von der Mobilstation in einem Adreßteil eines Signalkanals $K_{x+1}$ im ersten Rahmen R1 des Überrahmens angegebenen Zeichens (z.B. ein Alpha-Zeichen) mitgeteilt wird, während geweils in dem Adreßteil der Signalkanäle $K_{x+1}$ der anderen Rahmen R2 ... Rn z.B. die Teilnehmernummer der Mobilstation übertragen wird. Solche Feststationen, welche die Signalbursts mit zu schlechter Qualität empfangen, melden dies ihrer Funkvermittlungsstelle und nehmen an der nun durchzuführenden Signallaufzeitermittlung nicht mehr teil.

Die Meßempfänger der übrigen Nachbarfeststationen schalten, nachdem sie sich auf die von der Mobilstation ausgesendeten Signalbursts aufsynchronisiert haben, auf ein anderers Teilfrequenzband um. Dieses ist das erste von zwei im Unter- bzw. Oberband liegenden Frequenzbändern, die allen Feststationen des gesamten Mobilfunknetzes und allen Mobilstationen bekannt sind und nur zum Aussenden und Empfangen von Meßsignalen für die Ermittlung der Signallaufzeiten bestimmt sind.

In diesem ersten Teilfrequenzband senden nun in den Nachbarfeststationen vorhandene Meßsender Meßsignalburst aus, und zwar jeweils in einem Signalkanal des TDMA-Systems, der unmittelbar auf den Signalkanal folgt, in dem die Meßempfänger der Nachbarfeststationen vorher die von der Mobilstation ausgesendeten Signalbursts empfangen haben. Diesen Sachverhalt verdeutlichen die Zeilen 2 - 6. Die Zeile 2 zeigt nämlich die Lage der Signalkanäle $K_{x+1}$ in den TDMA-Rahmen R1 ... Rn, in denen die Mobilstation MS ihre Signalbursts aussendet, welche die Nutzinformation für die Feststation der Funkzelle A3 enthalten und gleichzeitig von den Feststationen der Nachbarfunkzellen z.B. A1, A2, B5, C7 zu Empfangsqualitätsmessungen ausgenutzt werden. Die Lage der um einen Zeitschlitz gegenüber diesen Signalkanälen $K_{x+1}$ versetzten Signalkanäle, in denen die Feststationen der Nachbarfunkzellen A1, A2, B5, C7 ihre Meßsignalbursts absetzen, geht aus den Zeilen 3 - 6 hervor. Dabei werden, wie die Zeilen 3 - 6 ebenfalls zeigen, von den Nachbarfeststationen die Meßsignalbursts nur in Rahmen R1 ... Rn gesendet, deren Nummer mit der Funkzellennummer der Nachbarfeststationen übereinstimmt (A1 - R1, A2 - R2, B5 - R5, C7 - R7).

Auf Anweisung von einer Funkvermittlungstelle MSC-A, MSC-B oder MSC-C schaltet die Mobilstation MS, nachdem sie ihre für die Feststation der Funkzelle A3 bestimmten Signalbursts ausgesendet hat, auf das erwähnte erste Frequenzteilband zum Empfang der von den Nachbarfeststationen abgegebenen Meßsignalbursts um. Anschließend schalten die Mobilstation und die Nachbarfeststationen auf ein zweites Frequenzteilband um, in dem die Mobilstation die Meßsignalbursts zurücksendet und diese von den einzelnen Nachbarfeststationen empfangen werden. Die Rückübertragung der Meßsignalbursts von der Mobilstation MS zu den Feststationen der Nachbarfunkzellen A1, A2, B5, C7 erfolgt in dem Signalkanal, der sich direkt dem Signalkanal anschließt, in dem von den Nachbarfeststationen die Meßsignalbursts zur Mobilstation übertragen worden sind. Die Zeilen 3 - 6 in Fig. 2 zeigen die Lage des Signalkanals innerhalb der verschiedenen TDMA-Rahmen, in denen die Meßsignalbursts von den Nachbarfeststationen ausgesendet werden, und Zeilen 7 (unterer Teil), 8, 9, 10 und 11 zeigen die Lage der Signalkanäle, in denen die Mobilstation die Meßsignalbursts zurücksendet (Zeile 7) bzw. die Feststationen der Nachbarfunkzellen A1, A2, B5, C7 die zurückgesendeten Meßsignalbursts empfangen (Zeilen 8 - 11).

Wie aus den übertragenen Meßsignalbursts die Signallaufzeiten abgeleitet werden, soll an Hand der in den Zeilen 12 - 15 vergrößert und detailliert dargestellten Signalkanäle z.B. der TDMA-Rahmen R1, R2 und R3 erläutert werden.

Die Zeile 12 zeigt noch einmal zusammengefaßt, daß auf einen im Signalkanal $K_x$ von der Feststation der Funkzelle A3 an die Mobilstation MS ausgesendeten Signalburst mit Nutzinformation im darauffolgenden Signalkanal $K_{x+1}$ die Mobilstation MS ihren Signalburst mit Nutzinformation an die Feststation der Funkzelle A3 absetzt. Weiterhin verdeutlicht die Zeile 12, daß im nächsten Signalkanal $K_{x+2}$ jeweils ein Meßsignalburst im Rahmen R1 von der Feststation der Funkzelle A1 und im Rahmen R2 von der Feststation der Funkzelle A2 zur Mobilstation MS übertragen wird. Gleich im Anschluß an diesen Signalkanal $K_{x+2}$, im vorliegenden Beispiel ist es der erste Signalkanal K1 des nächsten Rahmens, sendet die Mobilstation den gleichen Meßsignalburst an die Feststationen der Nachbarfunkzellen A1 bzw. A2 zurück.

Die Zeile 13 ist eine gespreizte Darstellung der Signalkanäle $K_{x+1}$, $K_{x+2}$ und $K_1$ der TDMA-Rahmen R1 bzw. R2.

Der Signalkanal K$_{x+1}$, in welchem Nutzinformation von der Mobilstation MS zur Feststation der Funkzelle A3 übertragen wird, ist folgendermaßen aufgebaut:

Er beginnt mit einem Kanalsynchronwort K-Syn, dem sich ein Adresswort Adr anschließt. Darauf folgt eine sprach- oder datenbegleitende Signalisierung Sig. Diese Siganlisierung, auch Inbandsignalisierung genannt, enthält z.B. Informationen über Gebühreneinheiten, über Sendeleistungseinstellungen, über Umschaltungen von Sprache auf Daten, Quittierungen und die Anweisung an die Feststationen, sich für die Signallaufzeitmessung auf das dafür vorgesehene Teilfrequenzband umzustellen. Die überwiegende Anzahl der Bits in dem Signalkanal K$_{x+1}$ wird von der eigentlich zu übertragenden Sprach- oder Dateninformation Info belegt. Am Ende des Signalkanals ist ein Bitblock Z für den Ausgleich der unterschiedlichen Laufzeiten der ausgesendeten Signalburst vorgesehen.

Der im folgenden Signalkanal K$_{x+2}$ von der Feststation der Funkzelle A1 ausgesendete Meßsignalburst beginnt, wie die Zeile 14 verdeutlicht, gegenüber dem Anfang des Signalkanals K$_{x+2}$ um eine Zeit τ und eine Umschaltzeit U verzögert. Die Zeit τ beruht auf der Laufzeit des von der Mobilstation MS ausgesendeten und von der Feststation der Funkzelle A1 empfangenen Signalbursts, auf den sich die Feststation aufsynchronisiert. Die Umschaltzeit U ist bedingt durch die Umschaltung der Feststation auf das erste der zwei für die Laufzeitmessung bestimmten Teilfrequenzbänder. Der Meßsignalburst enthält am Anfang ein Synchronwor Syn, dann die Nummer MS-Nr der zu ortenden Mobilstation MS und die Nummer FS-Nr der Feststation, welche diesen Meßsignalburst aussendet.

In dem gleichen Signalkanal K$_{x+2}$ empfängt die Mobilstation MS den Meßsignalburst, aber zusätzlich nochmals um die Signallaufzeit τ verzögert, so daß der Meßsignalburst gegenüber dem Beginn des Signalkanals K$_{x+2}$ insgesamt um die Zeit U+2τ verzögert in der Mobilstation MS angelangt (vgl. Zeile 13).

Genau um die Dauer eines Signalkanals versetzt gegenüber dem Beginn des empfangenen Meßsignalbursts sendet die Mobilstation MS den gleichen Meßsignalburst im zweiten der zwei Teilfrequenzbänder wieder aus. Die verbleibende Zeit U' zwischen dem Ende des empfangenen Meßsignalbursts und dem Anfang des wieder zurückgesendeten Meßsignalbursts nutzt die Mobilstation aus, um die im Meßsignalburst übermittelte Mobilstationsnummer MS-Nr mit der eigenen Nummer auf Übereinstimmung zu überprüfen.

Der inzwischen auf das zweite Teilfrequenzband umgeschaltete Meßempfänger der Feststation der Funkzelle A1 empfängt den von der Mobilstation MS zurückgesendeten Meßsignalburst um die Signallaufzeit τ verzögert (vgl. Zeile 15). Damit entspricht der zeitliche Abstand L zwischen dem Beginn des von dem Meßsender der Feststation ausgesendeten und dem Beginn des von dem Meßempfänger der Feststation wieder empfangenen Meßsignalburst einer Signalkanaldauer zuzüglich der doppelten Signallaufzeit 2 τ (vgl. Zeilen 14, 15). In der Feststation liegt nunmehr eine Information über die Signallaufzeit τ zwischen ihr selbst und der Mobilstation MS vor.

Alle Feststationen der Nachbarfunkzellen geben ihre ermittelte Signallaufzeit τ, sowie u.U. noch andere Qualitätskriterien der Signalverbindung an eine Funkvermittlungsstelle weiter, welche aus all den übermittelten Informationen diejenige Feststation bestimmt, an die die Mobilstation auf Grund der kürzesten Entfernung, guter Übertragungsqualität und noch freier Signalkanäle weitergereicht werden soll.

Durch das angegebene Verfahren ist die Ortsbestimmung einer Mobilstation während der Nutzinformationsübertragung ohne deren Beeinträchtigung möglich. Ferner brauchen die Rahmen und Überrahmen der Feststationen des Netzes nicht synchron zueinander sein, ja sogar die Taktfrequenzen können plesiochron sein, da jede Feststation sich vor der Ortsmessung auf den Nutzkanal der zu ortenden Mobilstation erst aufsynchronisiert und Takt sowie Rahmen und Überrahman während der Übertragung des Meßsignalbursts für die Dauer eines Überrahmens genau genug beibehalten werden können.

Nachdem diejenige Feststation ermittelt worden ist, an welche die Mobilstation für den weiteren Nachrichtenverkehr zu übergeben ist, wird der Mobilstation von der betreffenden Feststation aus mitgeteilt, auf welchen Teilfrequenzbändern und in welchen Kanalzeitschlitzen der Nachrichtenaustausch stattfinden soll.

Die Übertragung dieser Information erfolgt auf die gleiche Weise wie die oben an Hand der Zeilen 13 bis 15 in Fig. 2 beschriebene Übertragung des Meßsignalburst für die Laufzeitermittlung. Auch hier schalten die Mobilstation und die Feststation zunächst auf ein erstes von zwei Teilfrequenzbändern um, die allen Feststationen des gesamten Mobilfunknetzes und allen Mobilstationen bekannt sind und nur zum Aussenden und Empfangen von Signalbursts mit Information über die für den weiteren Nachrichtenaustausch in Frage kommenden Teilfrequenzbänder und Kanalzeitschlitze.

In diesem ersten Teilfrequenzband sendet die Feststation den Signalburst mit den Angaben über die Teilfrequenzbänder und Kanalzeitschlitze an die Mobilstation aus.

Wie der Signalburst aufgebaut ist zeigt die Fig. 3. Er beginnt wie der Meßsignalburst in Zeilen 13, 14, 15 der Fig. 2 mit einem Synchronwort Syn, darauf folgen in einem Abschnitt TK die Angaben über die Teilfrequenzbänder TF und Kanalzeitschlitze KS für das Senden und Empfangen der Nutzinformation und evtl. in zwei letzten Abschnitten die Nummer MS-Nr der zu übergebenden Mobilstation und die Nummer FS-Nr der die Mobilstation übernehmenden Feststation.

Nachdem die Mobilstation den Signalburst korrekt empfangen hat, sendet sie den gleichen Signalburst als Quittung in dem zweiten der zwei vorbehaltenen Teilfrequenzbänder wieder an die Feststation, welche inzwisohen auch auf dieses zweite Teilfrequenzband umgeschaltet hat, zurück.

Nach dem Empfang der Quittung übermittelt die übernehmende Feststation der Mobilstation den Zeitpunkt für die Umschaltung auf die vorher mitgeteilten Teilfrequenzbänder und Kanalzeitschlitze.

Nach erfolgter Umschaltung stellt die Feststation, mit der die Mobilstation zuvor in Verbindung stand, fest, weil sie keine Signale mehr von der Mobilstation empfängt, daß diese Verbindung aufgehoben ist und kann nun die frei gewordenen Signalkanäle für eine Verbindung mit einer anderen Mobilstation anbieten.

Durch dieses Verfahren brauchen keine für das ganze Mobilfunknetz synchronen Umschaltzeitlagen festgelegt zu werden, vielmehr kann jede Feststation für sich selbst den Umschaltzeitpunkt bei der Übernahme einer Mobilstation bestimmen.

**Patentansprüche**

1. Verfahren zum Weiterreichen einer Mobilstation von einer Funkzelle zu einer anderen innerhalb eines zellularen Mobilfunknetzes, in dem jeder Funkzelle eine mit Mobilstationen Signale austauschende Feststation zugeordnet ist, wobei von allen Feststationen, welche zu derjenigen Feststation, die gerade mit der fraglichen Mobilstation in Verbindung steht, benachbart sind, die Empfangsqualität von Signalbursts gemessen wird, die von der betreffenden Mobilstation ausgesendet worden sind, und dann von den diese Signalbursts mit ausreichender Qualität empfangenden Nachbarfeststationen Signallaufzeitmessungen durchgeführt werden, wonach die Mobilstation an diejenige Feststation weitergereicht wird, für welche die geringste Signallaufzeit zwischen ihr und der Mobilstation ermittelt worden ist, dadurch gekennzeichnet, daß nach der Signallaufzeitmessung die für die Übernahme der Mobilstation bestimmte Feststation und die Mobilstation auf ein erstes Teilfrequenzband aus dem gesamten für den Mobilfunk zur Verfügung stehenden Frequenzbereich geschaltet werden, daß von der Feststation in diesem ersten Teilfrequenzband in einem Kanalzeitschlitz eines ihr zugeordneten Zeitmultiplexrahmens (TDMA-Rahmen) ein Signalburst ausgesendet wird, der die Information enthält, in welchen Teilfrequenzbändern und in welchen TDMA-Kanalzeitschlitzen die Mobilstation mit der Feststation verkehren kann, daß von der Mobilstation der empfangene Signalburst als Quittung in einem zweiten Teilfrequenzband an die Feststation, welche ebenfalls auf dieses zweite Teilfrequenzband eingestellt ist, zurückgesendet wird und daß darauf von der Feststation aus der Mobilstation der Umschaltzeitpunkt auf die für das Nutzsignal in Frage kommenden Teilfrequenzbänder und TDMA-Kanalzeitschlitze übermittelt wird.

2. Verfahren nach Anspruch 1, dadurch gekennzeichnet, daß alle Feststationen des gesamten Mobilfunknetzes die gleichen Teilfrequenzbänder benutzen für das Aussenden und Empfangen der Information über die für den Nachrichtenverkehr mit der neu übernommenen Mobilstation in Frage kommenden Teilfrequenzbänder und Kanalzeitschlitze.

3. Verfahren nach Anspruch 1, dadurch gekennzeichnet, daß die Mobilstation ihre Quittung in einem Kanalzeitschlitz des der Feststation zugeordneten TDMA-Rahmens zurücksendet, der unmittelbar auf den Kanalzeitschlitz folgt, in dem die Feststation ihren Signalburst mit der Information über die für den Nachrichtenverkehr mit der Mobilstation in Frage kommenden Teilfrequenzbänder und Kanalzeitschlitze aussendet.

4. Verfahren nach einem der vorhergehenden Ansprüche, dadurch gekennzeichnet, daß der von der Feststation ausgesendete Signalburst neben der Information über die für den Nachrichtenverkehr mit der neu übernommenen Mobilstation in Frage kommenden Teilfrequenzbänder und Kanalzeitschlitze auch die Nummer der betreffenden Mobilstation und seine eigene Nummer enthält.

**Claims**

1. Method for passing a mobile station on from one radio cell to another within a cellular mobile radio network, in which each radio cell is associated with a fixed station exchanging signals with mobile stations, wherein the reception quality of signal bursts, which have been emitted by the mobile station concerned, is measured by all fixed stations which are neighbouring that fixed station which is just standing in communication with the mobile station in question and signal transit time measurements are than performed by the neighbouring fixed stations receiving these signal bursts with sufficient quality, whereafter the mobile station is then passed on to that fixed station, for which the lowest signal transit time has been ascertained between it and the mobile station, characterised thereby, that after the signal transit time measurement, the fixed station determined for the take-over of the mobile station and the mobile station are switched to a first partial frequency band out of the total frequency range standing at disposal for the mobile radio, that a signal burst, which contains the information, in which partial frequency bands and in which time division multiple access channel time slots the mobile station can communicate with the fixed station, is emitted by the fixed station in this first partial frequency band in a channel time slot of a time multiplex frame (TDMA frame) allocated to it, that the received signal burst is sent back by the mobile station as acknowledgement in a second partial frequency band to the fixed station which is likewise set to this second partial frequency band and that the instant of change-over to the partial frequency bands and time division multiple access channel time slots, which come into question for the intelligence signal, is thereupon communicated by the fixed station to the mobile station.

2. Method according to claim 1, characterised thereby, that all fixed stations of the entire mobile radio network use the same partial frequency bands for the emission and reception of the information about the partial frequency bands and channel time slots coming into question for the communications traffic with the mobile station newly taken over.

3. Method according to claim 1, characterised thereby, that the mobile station sends its acknowledgement back in that channel time slot of the TDMA frame allocated to the fixed station, which follows immediately on the channel time slot, in which the fixed station emits its signal burst with thte information about the partial frequency bands and channel time slots coming into question for the communications traffic with the mobile station.

4. Method according to one of the preceding claims, characterised thereby, that the signal burst emitted by the fixed station, apart from the information about the partial frequency bands and channel time slots coming into question for the communications traffic with the mobile station newly taken over, also contains the number of the mobile station concerned and its own number.

## Revendications

1. Procédé pour transférer une station mobile d'une cellule hertzienne à une autre à l'intérieur d'un réseau hertzien cellulaire de stations mobiles, dans lequel une station fixe échangeant des signaux avec des stations mobiles est affectée à chaque cellule hertzienne, toutes les stations fixes voisines de la station fixe qui se trouve justement en communication avec la station mobile en question mesurant la qualité de réception de rafales de signaux émises par la station mobile concernée, puis les stations fixes voisines recevant ces rafales de signaux avec une qualité suffisante exécutant des mesures de temps de transit de signal d'après lesquelles la station mobile est transférée à la station fixe pour laquelle il a été établi que le temps de transit de signal entre elle et la station mobile est le plus faible, caractérisé par le fait qu'après la mesure de temps de transit de signal, la station fixe destinée à la prise en charge de la station mobile et cette dernière sont commutées sur une première bande de fréquence partielle prise dans l'ensemble du domaine de fréquences disponibles pour le système hertzien mobile, par le fait que la station fixe émet, dans cette première bande de fréquence partielle, dans une tranche de temps de canal d'un ensemble ordonné de multiplexage dans le temps (ensemble ordonné TDMA) qui lui est affecté, une rafale de signaux qui contient l'information concernant les bandes de fréquence partielles et les tranches de temps de canal TDMA dans lesquelles la station mobile peut avoir des échanges avec la station fixe, par le fait que la rafale de signaux reçue est réémise, en tant qu'accusé de réception, par la station mobile, dans une deuxième bande de fréquences partielle, cela pour la station fixe qui est également réglée sur cette deuxième bande de fréquence partielle, et par le fait que la station fixe transmet alors à la station mobile l'instant de commutation sur les tranches de temps de canal TDMA et les bandes de fréquence partielles envisagées pour le signal utile.

2. Procédé selon revendication 1, caractérisé par le fait que toutes les stations fixes de l'ensemble du réseau hertzien mobile utilisent les mêmes bandes de fréquence partielles pour l'émission et la réception de l'information concernant les tranches de temps de canal et les bandes de fréquence partielles envisagées pour le trafic d'informations avec la station mobile nouvellement prise en charge.

3. Procédé selon revendication 1, caractérisé par le fait que la station mobile réémet son accusé de réception dans une tranche de temps de canal de l'ensemble ordonné TDMA affecté à la station fixe et suivant immédiatement la tranche de temps de canal dans laquelle la station fixe émet sa rafale de signaux avec l'information concernant les bandes de fréquence partielles et les tranches de temps de canaux envisagées pour le trafic d'information avec la station mobile.

4. Procédé selon l'une des revendications précédentes, caractérisé par le fait que la rafale de signaux émise par la station fixe contient, en plus de l'information concernant les tranches de temps de canal et les bandes de fréquence partielles envisagées pour le trafic d'information avec la station mobile nouvellement prise en charge, le numéro de la station mobile concernée et son propre numéro.

FIG.1

FIG.3

FIG.2

EP 0 214 319 B1